Europäisches Patentamt

European Patent Office

Office européen des brevets

(19)

(11) Numéro de publication: **0 433 448 A1**

(12)

# DEMANDE DE BREVET EUROPEEN PUBLI E EN APPLICATION DE L'article 158, paragraphe 3 de la CBE

(21) Numéro de dépôt: 88909009.8

(22) Date de dépôt: 07.01.88

(86) Numéro de dépôt internationale : PCT/SU88/00008

(87) Numéro de publication internationale : WO 89/06194 (13.07.89 89/15)

(51) Int. Cl.⁵: **F16H 3/08**

(43) Date de publication de la demande:
26.06.91 Bulletin 91/26

(84) Etats contractants désignés:
**DE FR GB IT SE**

(71) Demandeur: **MOSKOVSKY AVTOMOBILNY ZAVOD IMENI I.A.LIKHACHEVA (PROIZVODSTVENNOE OBIEDINENIE ZIL) ul. Avtozavodskaya, 23 Moscow, 109280(SU)**

(72) Inventeur: **BORODIN, Fedor Nikolaevich ul. Marxistskaya, 9-514 Moscow, 109147(SU)**
Inventeur: **GORFINKEL, Solomon Izrailovich Klenovy bulvar, 9/2-2 Moscow, 115480(SU)**
Inventeur: **KURZEL, Iosif Antonovich ul. Miklukho-Maklaya, 43-77 Moscow, 117485(SU)** ·

(74) Mandataire: **Durand, Yves Armand Louis et al Cabinet Z. Weinstein 20, Avenue de Friedland F-75008 Paris(FR)**

(54) **DISPOSITIF POUR COMMANDER UNE TRANSMISSION A ORGANES MULTIPLES SUR UN VEHICULE.**

(57) Le dispositif de commande d'une transmission composite ayant une boîte de vitesses principale (1) et une boîte de vitesses auxiliaire (2) à deux gammes ayant une gamme supérieure et une gamme inférieure.

Ce dispositif comporte quatre coulisseaux, le quatrième coulisseau (37) est destiné à engager la gamme inférieure et la gamme supérieure de la boîte de vitesses auxiliaire (2) à deux gammes. Un mécanisme (51) est prévu pour le déplacement du quatrième coulisseau (37) en position de la gamme inférieure lors du déplacement du troisième coulisseau (36) du point mort en position d'engagement sous l'action d'un élément d'entraînement (38).

Ce dispositif s'applique par exemple, aux transmissions de véhicule de transport tel qu'un camion.

FIG.1

## "DISPOSITIF DE COMMANDE D'UNE TRANSMISSION COMPOSITE D'UN MOYEN DE TRANSPORT"

Domaine de l'invention.

La présente invention concerne les constructions mécaniques, et a notamment pour objet un dispositif de commande d'une transmission d'un moyen de transport.

Etat de la technique.

A l'heure actuelle, il existe un problème de création d'un dispositif fiable pour la commande d'une transmission composite d'un moyen de transport ayant une boîte de vitesses principale et une boîte de vitesses auxiliaire à deux gammes : une gamme supérieure et une gamme inférieure, liée en série à ladite boîte de vitesses principale.

Les transmissions de ce type ont trouvé application, en général, dans des camions d'une capacité de charge moyenne et élevée. La liaison de la boîte de vitesses auxiliaire à deux gammes et de la boîte de vitesses principale en série permet d'augmenter de deux fois le nombre total de rapports dans la transmission ce qui contribue à l'amélioration des qualités dynamiques et de vitesse d'un camion et à la réduction de la consommation du combustible dans une large gamme de conditions de son utilisation.

Cependant, la nécessité de réaliser la commande simultanée de deux boîtes de vitesses, une boîte de vitesses principale et une bôite de vitesses auxiliaire, aboutit à la complications des dispositifs de commande de ces transmissions composites et, par conséquent, à la diminution de leur fiabilité.

On connaît un dispositif de commande d'une transmission composite d'un moyen de transport (DE, C, 1195177) ayant une boîte de vitesses principale et une boîte de vitesses auxiliaire à deux gammes : une gamme supérieure et une gamme inférieure.

La boîte de vitesses principale qui assure l'obtention de quatre vitesses en marche avant comporte des pignons de prise constante, montés sur des arbres tournants parallèles et deux manchons à denture, dont l'un sert à engager alternativement deux vitesses en marche avant et l'autre est destiné à engager alternativement deux autres vitesses en marche avant. La boîte de vitesses auxiliaire à deux gammes est conçue selon le schéma d'un train épicycloïdal et comporte son propre manchon à denture destiné à engager alternativement la gamme inférieure (rapport de démultiplication) et la gamme supérieure (prise directe).

Le dispositif utilisé pour la commande de cette transmission composite comporte un carter, un levier de commande manuelle articulé avec le carter, un arbre monté dans le carter, lié cinématiquement au levier de commande manuelle et ayant des doigts qui sont engagés en prise avec les doigts de commande des manchons à denture de la boîte de vitesses principale, un dispositif d'exécution pneumatique destiné à déplacer le manchon à denture de la boîte de vitesses auxiliaire à deux gammes et un système des soupapes pour la commande du dispositif d'exécution pneumatique.

Le levier de commande manuelle possède une boule que l'opérateur, conducteur d'un moyen de transport prend par une main et déplace, et est monté sur le carter du dispositif de commande de la transmission composite de façon qu'il soit possible de tourner le levier en le déplaçant suivant la trajectoire en forme "d'un double H". Lorsqu'on déplace la boule du levier dans le sens transversal, ce levier tourne l'arbre de manière qu'il effectue la sélection des vitesses dans la boîte de vitesses principale et pendant le déplacement de la boule du levier dans le sens longitudinal ce levier déplace le même arbre dans la direction axiale dans une ou dans l'autre direction de façon à effectuer l'engagement mécanique d'une vitesse sélectionnée dans la boîte de vitesses principale.

Pendant qu'est déplacée la boule du levier suivant une moitié de la trajectoire en forme "d'un double H", il se produit le changement successif des vitesses dans la boîte de vitesses principales dans une gamme de la boîte de vitesses auxiliaire à deux gammes. Pendant qu'on déplace la boule du levier, dans le sens transversal, d'une moitié de la trajectoire en forme "d'un double H", dans l'autre moitié de ladite trajectoire les soupapes entrent en jeu et mettent en action le dispositif d'exécution pneumatique destiné à changer les gammes dans la boîte de vitesses auxiliaire à deux gammes. Pendant, le déplacement ultérieur de la boule du levier suivant la deuxième moitié de la trajectoire du type "d'un double H", il se produit le changement successif des vitesses dans la boîte de vitesses principale mais, dans ce cas, dans l'autre gamme de la boîte de vitesses auxiliaire à deux gammes.

Le dispositif connu et décrit, utilisé pour la commande d'une transmission composite assure une commande simple d'une transmission à un grand nombre de rapports au moyen d'un déplacement de la boule du levier de commande manuelle suivant le schéma analogue au schéma du déplacement de la boule du levier de commande d'une transmission dont le nombre de rapports est inférieur de deux fois.

Cependant, dans le cas d'une panne du dispositif d'exécution pneumatique ou d'un des éléments du système des soupapes effectuant la commande du dispositif de commande pneumatique, le changement des gammes dans la boîte de vitesses auxiliaire à deux gammes devient irréalisable.

Dans ce cas, un moyen de transport dans lequel on a engagé la gamme supérieure ne peut pas démarrer et se déplacer à une vitesse inférieure pour qu'on arrive à un endroit voulu, convenable pour la réalisation de la réparation du dispositif de commande.

On connaît également un dispositif de commande d'une transmission composite d'un moyen de transport (DE, C, 3000577) ayant une boîte de vitesses principale et une boîte de vitesses auxiliaire à deux gammes : une gamme supérieure et une gamme inférieure, liée en série à la boîte de vitesses principale.

Ce dispositif comporte un carter, sont montés de manière à pouvoir coulisser dans ce carter, le premier et le deuxième coulisseaux destinés à engager quatre vitesses en marche avant dans la boîte de vitesses principale et le troisième coulisseau servant à engager la vitesse de marche arrière dans la boîte de vitesses principale ainsi qu'un arbre lié cinématiquement au levier de commande manuelle et destiné à déplacer séparément le premier, le deuxième et le troisième coulisseau du point mort en position d'engagement des vitesses et inversement, et monté dans le carter avec possibilité de rotation et de déplacement dans le sens axial.

Une soupape est prévue pour la commande du dispositif d'exécution pneumatique de la boîte de vitesses auxiliaire à deux gammes. Elle est montée dans le carter et est actionnée par une came liée à l'arbre.

Dans ce dispositif, le troisième coulisseau peut être utilisé lui aussi pour engager dans la boîte de vitesse principale la cinquième vitesse supplémentaire en marche avant, dont l'engagement de même que l'engagement de la vitesse en marche arrière ne peut être réalisé qu'en ayant engagé la gamme inférieure dans la boîte de vitesses auxiliaire à deux gammes. En combinaison avec la gamme inférieure de la boîte de vitesses auxiliaire, la cinquième vitesse de la marche avant assure l'obtention du plus petit rapport (rapport lent) dit "rapport rampant" dans la transmission.

La présence du troisième coulisseau dans le dispositif de commande d'une transmission composite pour l'engagement des vitesses dans la boîte de vitesses principale élargit les possibilités du travail de la transmission composite.

Cependant, ce dispositif lui aussi n'assure pas les possibilités du changement de gammes dans la boîte de vitesses auxiliaire à deux gammes en cas de panne du dispositif d'exécution pneumatique.

On connaît également un dispositif de commande d'une transmission composite d'un moyen de transport (DE, C, 3333423) ayant une boîte de vitesses principale et une boîte de vitesse auxiliaire à deux gammes : une gamme supérieure et une gamme inférieure.

Ce dispositif de commande d'une transmission composite comporte un carter, sont montés dans ledit carter de la manière à pouvoir coulisser, le premier et le deuxième coulisseaux destinés à engager les vitesses en marche avant dans la boîte de vitesses principale, le troisième coulisseau destiné à engager la vitesse en marche arrière dans la boîte de vitesses principale et le quatrième coulisseau destiné à engager la gamme inférieure et la gamme supérieure dans la boîte de vitesses auxiliaire à deux gammes.

Le dispositif connu de commande d'une transmission composite comprend aussi un élément d'entraînement, lié cinématiquement au levier de commande manuelle et destiné à déplacer séparément le premier, le deuxième et le troisième coulisseaux du point mort en position d'engagement des vitesses et inversement, et monté d'une manière mobile dans le carter.

Un dispositif d'exécution est aussi prévu pour le déplacement du quatrième coulisseau dans la position d'engagement de la gamme inférieure et dans la position d'engagement de la gamme supérieure, et est commandé par ledit élément d'entraînement.

Dans ce dispositif connu réalisant la commande d'une transmission composite, l'élément d'entraînement susmentionnée est conçu sous la forme d'un arbre monté dans le carter avec possibilité de tourner et de se déplacer dans le sens axial. Le levier de commande manuelle possède une boule qu'on déplace à la main suivant une trajectoire du type "d'un double H" dans la direction transversale entre plusieurs points morts et dans la direction longitudinale de chaque point mort dans une position correspondante d'engagement des rapports de transmission.

La liaison cinématique de l'arbre et du levier de commande manuelle est réalisée à l'aide d'un mécanisme qui assure le déplacement axial de l'arbre pendant qu'on déplace la boule du levier dans la direction transversale, et la rotation de l'arbre pendant qu'on déplace la boule du levier dans ladite direction longitudinale.

Dans le dispositif de commande connu d'une transmission composite, le dispositif d'exécution destiné à déplacer le quatrième coulisseau est réalisé sous la forme d'un vérin pneumatique à double effet, dont le piston est lié au coulisseau.

Ce dispositif de commande connu d'une transmission composite d'un moyen de transport assure l'engagement de jusqu'à neuf rapports en marche avant et un rapport en marche arrière à l'aide d'un seul levier de commande manuelle déplacé par le conducteur d'un moyen de transport de la manière analogue au déplacement du levier de commande manuelle dans les autres transmissions connues dont le nombre de rapports est inférieur et à l'aide du dispositif d'exécution ayant sa propre source d'énergie et commandé lui aussi par le levier de commande manuelle.

Cependant, en cas de panne du dispositif d'exécution ou de la source d'énergie pour le dispositif d'exécution, le changement des gammes dans la boîte de vitesses auxiliaire à deux gammes devient irréalisable. Si la panne avait lieu au moment où la gamme supérieure a été engagée dans la boîte de vitesses auxiliaire à deux gammes on ne réussira pas à mettre en marche le moyen de transport et à le faire se déplacer à la vitesse inférieure à un endroit voulu, convenable pour la réalisation de la réparation du dispositif de commande.

Exposé de l'invention.

On s'est donc proposé de créer un dispositif de commande d'une transmission composite d'un moyen de transport dont la conception permettrait d'engager la gamme inférieure dans la boîte de vitesses auxiliaire à deux gammes en cas de panne du dispositif d'exécution destiné à déplacer le quatrième coulisseau.

Le problème ainsi posé est résolu à l'aide d'un dispositif de commande d'une transmission composite d'un moyen de transport ayant une boîte de vitesses principale et une boîte de vitesses auxiliaire à deux gammes, une gamme supérieure et une gamme inférieure, liée en série à ladite boîte de vitesses principale, dispositif comportant un carter dans lequel sont montés de manière mobile le premier et le deuxième coulisseaux destinés à engager les vitesses en marche avant dans la boîte de vitesses principale, le troisième coulisseau destiné à engager la vitesse en marche arrière dans la boîte de vitesses principale et le quatrième coulisseau servant à engager la gamme inférieure et la gamme supérieure dans la boîte de vitesses auxiliaire à deux gammes ainsi qu'un élément d'entraînement monté d'une manière mobile dans le carter, lié cinématiquement à un levier de commande manuelle, et destiné à déplacer séparément le premier, le deuxième et le troisième coulisseaux du point mort en position d'engagement des vitesses et inversement, et un dispositif d'exécution destiné à déplacer le quatrième coulisseau en position d'engagement de la gamme inférieure et en position d'engagement de la gamme supérieure lié cinématiquement à l'élément d'entraînement, caractérisé, selon l'invention, en ce qu'on a prévu un mécanisme pour le déplacement du quatrième coulisseau en position d'engagement de la gamme inférieure lors du déplacement du troisième coulisseau du point mort en position d'engagement de la vitesse sous l'action dudit élément d'entraînement, mécanisme qui comporte le premier élément lié de façon qu'il puisse se déplacer conjointement avec le quatrième coulisseau et le deuxième élément disposé en face du premier élément et destiné à coopérer avec ledit premier élément et lié de façon qu'il puisse se déplacer conjointement avec le troisième coulisseau.

En introduisant dans le dispositif de commande d'une transmission composite d'un moyen de transport, un mécanisme pour le déplacement du quatrième coulisseau en position d'engagement de la gamme inférieure lors du déplacement du troisième coulisseau du point mort en position d'engagement de la vitesse sous l'action de l'élément d'entraînement lié cinématiquement au levier de commande manuelle, on assure la possibilité d'engager mécaniquement d'une manière forcée la gamme inférieure dans la boîte de vitesses auxiliaire à deux gammes à l'aide du levier de commande manuelle en cas de panne du dispositif d'exécution effectuant le déplacement du quatrième coulisseau.

En prévoyant dans le mécanisme susmentionné destiné au déplacement du quatrième coulisseau, le premier élément lié de manière qu'il puisse se déplacer conjointement avec le quatrième coulisseau et le deuxième élément disposé en face du premier élément et destiné à coopérer avec ledit premier élément et à se déplacer conjointement avec le troisième coulisseau, on donne la possibilité de déplacer d'une manière simple et efficace le quatrième coulisseau en position de la gamme inférieure du point mort en position d'engagement de la vitesse sous l'action de l'élément d'entraînement.

Il est avantageux que le troisième coulisseau et le quatrième coulisseau soient disposés essentiellement suivant une ligne et que le premier élément et le deuxième élément du mécanisme de déplacement du quatrième coulisseau soient réalisés sous la forme de butoirs liés rigidement aux coulisseaux correspondants.

En disposant le troisième et le quatrième coulisseaux essentiellement suivant une ligne droite et en réalisant lesdits éléments susmentionnés sous la forme de butoirs liés rigidement aux coulisseaux correspondants, on donne la possibilité de créer un dispositif de commande de transmission composite qui est plus simple et plus fiable en fonctionnement, surtout dans le cas où la valeur de la course du quatrième coulisseau depuis la position d'engagement de la gamme supérieure en position d'engagement de la gamme inférieure dans la boîte de vitesses auxiliaire à deux gammes est égale essentiellement à la valeur de la course du troisième coulisseau depuis le point mort en position d'engagement de la vitesse en marche arrière dans la boîte de vitesses principale.

Il est recommandé que le troisième et le quatrième coulisseaux soient disposés essentiellement parallèlement, à une distance donnée l'un de l'autre et que ledit mécanisme destiné à déplacer le quatrième coulisseau comporte un ensemble levier et articulation comprenant un coulisseau supplémentaire monté d'une manière mobile dans le carter et disposé essentiellement suivant une même ligne avec le troisième coulisseau et un levier articulé avec le coulisseau et s'appuyant par ses extrémités sur le quatrième coulisseau et l'appui respectivement, appui fixé dans le carter, le premier élément et le deuxième élément du mécanisme de déplacement du quatrième coulisseau étant réalisés sous la forme de butoirs liés rigidement aux coulisseaux correspondants.

En disposant le troisième coulisseau et le quatrième coulisseau essentiellement parallèlement et à une distance donnée l'un par rapport à l'autre et en équipant le mécanisme de déplacement du quatrième coulisseau d'un ensemble levier d'articulation monté l'un dans le carter et destiné à lier l'un des éléments, entrant en coopération avec un coulisseau correspondant, on donne la possibilité de créer le dispositif de commande d'une transmission composite qui est plus simple et plus fiable en service quand la valeur de la course du quatrième coulisseau depuis la position d'engagement de la gamme inférieure dans la boîte de vitesses auxiliaire à deux gammes diffère de la valeur de la course du troisième coulisseau depuis le point mort en position d'engagement de la vitesse de marche arrière dans la boîte de vitesses principale.

Ainsi, le dispositif de commande d'une transmission composite réalisé selon la présente invention permet d'engager la gamme inférieure de la boîte de vitesses auxiliaire à deux gammes dans le cas d'une panne du dispositif d'exécution effectuant le déplacement du quatrième coulisseau.

Le dispositif proposé pour la commande d'une transmission composite est caractérisé par une conception assez simple et fiable et par son utilisation aisée.

L'invention sera mieux comprise et d'autres buts, détails et avantages de celle-ci apparaîtront mieux à la lumière de la description explicative qui va suivre d'un mode de réalisation donné uniquement à titre d'exemple non limitatif avec références aux dessins annexés non limitatifs dans lesquels :

Suscinct des dessins.

La figure 1 représente une chaîne cinématique d'une transmission composite et de son dispositif de commande, selon l'invention ;

La figure 2 représente d'une manière schématique le dispositif de commande d'une transmission composite, selon l'invention, en coupe longitudinale ;

La figure 3 est une coupe suivant la ligne III-III sur la figure 2 ;

La figure 4 est une coupe suivant la ligne IV-IV sur la figure 2 ;

La figure 5 représente un schéma de déplacement de la boule du levier de commande manuelle ;

La figure 6 est une coupe suivant la ligne VI-VI sur la figure 2 dans le cas où le troisième et le quatrième coulisseaux sont disposés essentiellement suivant une même ligne, la boîte de vitesses principale étant au point mort et la gamme inférieure dans la boîte de vitesses auxiliaire à deux gammes étant en position engagée ;

La figure 6a est analogue à la figure 6, la boîte de vitesses principale étant au point mort et la gamme supérieure de la boîte de vitesses auxiliaire à deux gammes étant engagée ;

La figure 6b est analogue à la figure 6, la vitesse de marche arrière dans la boîte de vitesses principale étant en position engagée ;

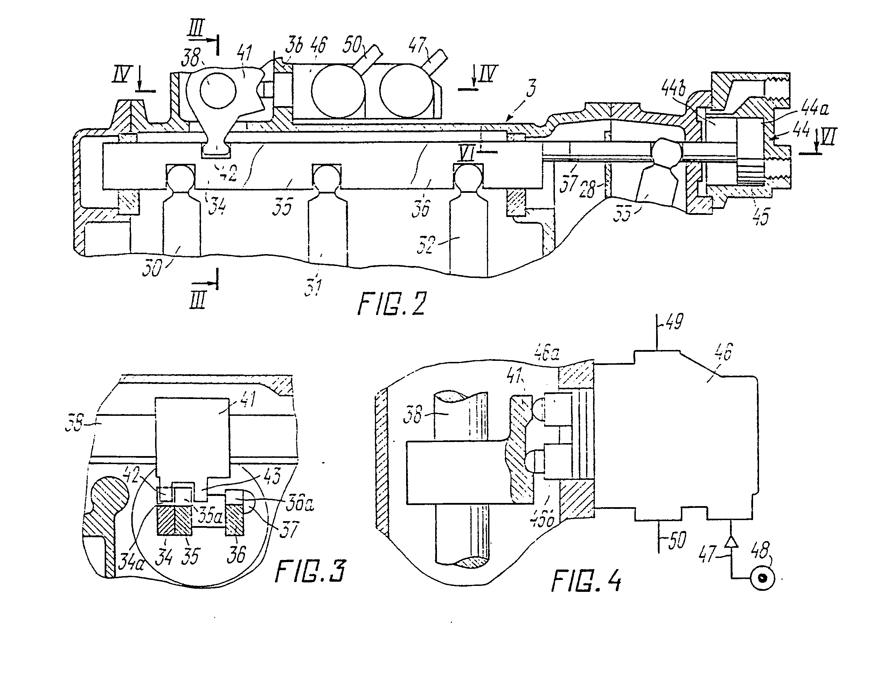

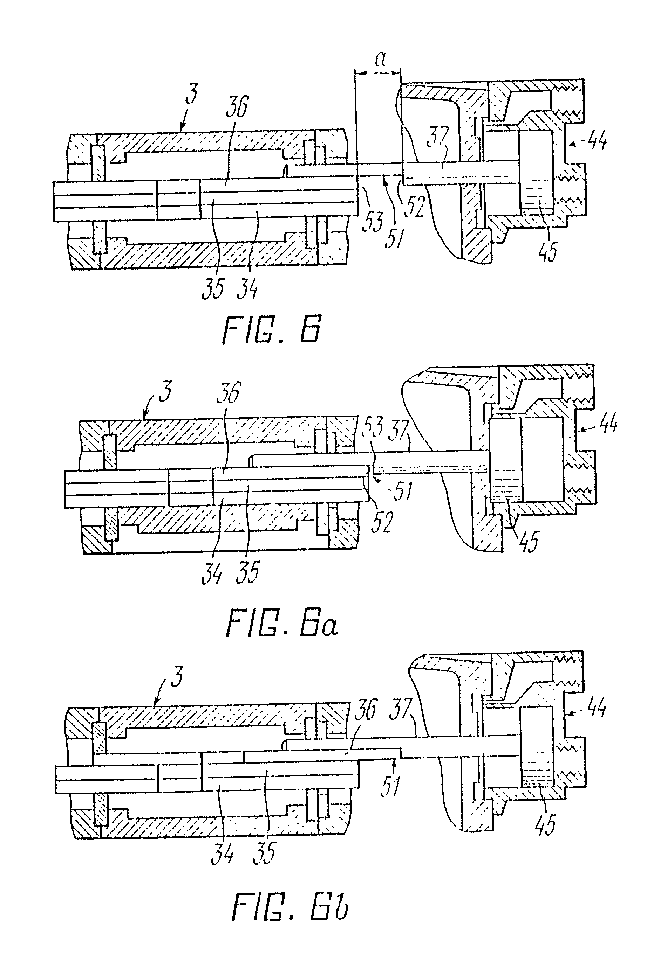

La figure 6c est une coupe suivant la ligne VI-VI sur la figure 2 dans le cas où le troisième et le quatrième coulisseaux sont disposés essentiellement parallèlement et à une distance donnée l'un par rapport à l'autre et le mécanisme de déplacement du quatrième coulisseau est équipé d'un ensemble levier et articulation ; les traits pleins représentant cet ensemble et correspondent à la position d'engagement de la gamme inférieure de la boîte de vitesses auxiliaire à deux gammes, les traits interrompus mixtes représentent la position d'engagement de la gamme supérieure de la boîte de vitesses auxiliaire à deux gammes.

La meilleure variante de réalisation.

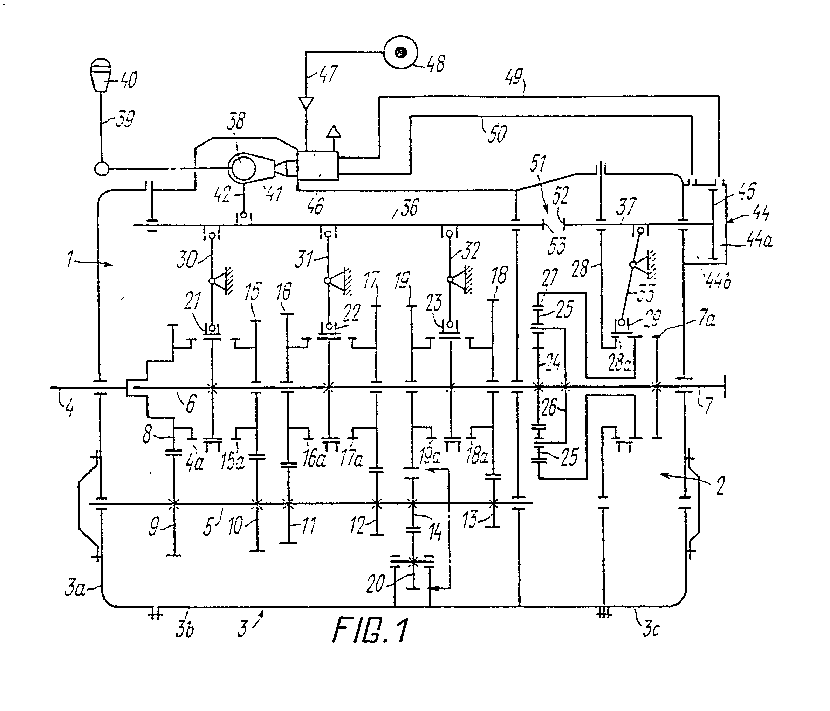

Le dispositif de commande d'une transmission composite d'un moyen de transport et notamment d'un camion réalisé selon la présente invention, est destiné à une transmission composite ayant une boîte de vitesses principale 1 (figure 1) et une boîte de vitesses auxiliaire à deux gammes 2, une gamme supérieure et une gamme inférieure, liée en série à ladite boîte de vitesses principale.

Les deux boîtes de vitesses 1 et 2 ont un carter commun 3 formé par trois parties 3a, 3b et 3c qui sont liées rigidement les unes aux autres.

Dans le carter 3, on a monté dans des paliers d'une conception connue (non désignés par des repères) un arbre menant 4 de la boîte de vitesses principale 1, un arbre intermédiaire 5 de la boîte de vitesses principale 1 qui est parallèle audit arbre 4, un arbre mené 6 de la boîte de vitesses principale 1 faisant office d'arbre menant de la boîte de vitesses auxiliaire à deux gammes 2 et disposé coaxialement à l'arbre menant 4 de la boîte de vitesses principale 1 et un arbre mené 7 de la boîte de vitesses auxiliaire à deux gammes 2 disposé coaxialement aux arbres 4 et 6.

L'arbre menant 4 est réalisé de façon appropriée pour qu'il puisse s'accoupler par l'intermédiaire d'un embrayage à friction (non représenté), réalisé selon une conception connue, avec l'arbre d'un moteur (non représenté) d'une conception connue d'un moyen de transport. L'arbre mené 7 est réalisé de façon appropriée pour qu'il puisse être accouplé par l'intermédiaire d'un arbre à cardan (non représenté) d'une conception connue avec le renvoi d'angle du pont moteur (non représenté) réalisés eux aussi selon une conception connue d'un moyen de transport.

Un pignon menant 8 est réalisé en une seule pièce avec l'arbre menant 4 et est en prise constante avec un pignon mené 9, calé sur l'arbre intermédiaire 5. Des pignons 10, 11, 12, 13, 14 sont fixés sur l'arbre intermédiaire 5.

Des pignons 15, 16, 17, 19 sont montés sur l'arbre mené 6 de la boîte de vitesses principale 1 sur des paliers (non désignés par les repères) d'une conception connue. Les pignons 15, 16, 17, 18 sont destinés à assurer les vitesses en marche avant de la boîte de vitesses principale 1 et se trouvent en prise constante avec les pignons 10, 11, 12, 13 respectivement de l'arbre intermédiaire 5. Le pignon 19 est destiné à assurer la vitesse en marche arrière de la boîte de vitesses principale 1 et se trouve en prise constante avec un pignon intermédiaire 20 qui, se trouve à son tour, en prise constante, avec le pignon 14 de l'arbre intermédiaire 5. Le pignon intermédiaire 20 est monté sur des paliers, (non désignés par les références) réalisés selon une conception connue disposés dans le carter 3, et est disposé en dehors du plan tracé par les axes géométriques des arbres 4, 5 et 6 (la figure 1 représente le pignon 20 d'une manière conventionnelle dans le plan du dessin dans lequel se trouvent les axes géométriques des arbres 4, 5 et 6).

Des manchons à denture 21, 22, 23 réalisés selon une conception connue, sont montés sur l'arbre 6 de manière qu'ils puissent coulisser dans le sens axial pour le changement de vitesses et sont fixés pour qu'ils puissent tourner conjointement avec l'arbre 6. Le manchon 21 est destiné à accoupler l'arbre menant 4 ou le pignon 15 avec l'arbre mené 6, c'est-à-dire, à engager une des deux vitesses supérieures en marche avant dans la boîte de vitesses principale 1. A cet effet, l'arbre 4 est pourvu d'une denture d'accouplement 4a et le pignon 15 possède une denture d'accouplement 15a.

Le manchon 22 est destiné à l'accouplement du pignon 16 ou du pignon 17 avec l'arbre mené 6, c'est-à-dire, à l'engagement d'une des deux vitesses inférieures en marche avant de la boîte de vitesses principale. A cet effet, le pignon 16 est muni d'une denture d'accouplement 16a et le pignon 17 possède une denture d'accouplement 17a.

Le manchon 23 est destiné à accoupler le pignon 18 ou le pignon 19 avec l'arbre mené 6, c'est-à-dire, à engager soit la vitesse la plus inférieure de marche avant soit la vitesse en marche arrière de la boîte de vitesses principale 1. A cet effet, le pignon 18 est pourvu d'une denture d'accouplement 18a et le pignon 19 possède une denture d'accouplement 19a.

Les manchons 21, 22, 23 à denture, pour le changement de vitesses possèdent des dispositifs de synchronisation (non représentés) réalisés selon une conception connue. La figure 1 représente les manchons 21, 22, 23 au point mort quand l'arbre 4 et les pignons 15, 16, 17, 18, 19 ne sont pas accouplés à l'arbre 6.

Un pignon solaire menant 24 de la boîte de vitesses auxiliaire à deux gammes 2 est fixé sur l'extrémité de l'arbre 6 (extrémité droite d'après la figure 1). Le pignon 24 est en prise constante avec les satellites 25 qui sont montés à l'aide de paliers (non désignés par les repères) réalisés selon une conception connue sur un porte-satellites 26, rendu solidaire de l'arbre mené 7 de la boîte de vitesses auxiliaire à deux gammes 2. Une couronne dentée 27 se trouve en prise constante avec lesdits satellites 25.

La boîte de vitesses auxiliaire à deux gammes 2 comprend une pièce intercalaire 28 réalisée sous la forme d'une plaque montée entre les parties 3b et 3c du carter 3 et est liée rigidement avec celles-ci et un manchon 29 à denture coulissant pour le changement de vitesses servant à accoupler la couronne dentée 27 soit avec l'arbre mené 7 soit avec la pièce intercalaire 28 pour assurer l'engagement soit de la gamme supérieure soit de la gamme inférieure de la boîte de vitesses auxiliaire à deux gammes 2.

A cet effet, l'arbre mené 7 et la pièce intercalaire 28 sont pourvus des dentures d'accouplement 7a, 28a respectivement.

La figure 1 représente le manchon 29 en position dans laquelle elle accouple la couronne dentée 27 avec la pièce intercalaire 28 c'est-à-dire dans la position d'engagement de la gamme inférieure. Le manchon 29 possède un dispositif de synchronisation (non représenté) réalisé selon une conception connue.

Des fourchettes 30, 31, 32, 33 sont montées dans le carter 3 par articulation et sont liées aux manchons 21, 22, 23 et 29 de changement de vitesses respectivement.

Le dispositif de commande de la transmission composite décrite ci-dessus comporte un carter réalisé en une seule pièce avec le carter 3 des boîtes de vitesse 1 et 2 et désigné par le même repère 3. Le premier coulisseau 34 (figure 2), le deuxième coulisseau 35, le troisième coulisseau 36 et le quatrième coulisseau 37 sont montés dans le carter 3 de manière à pouvoir coulisser dans des guidages (non désignés par les repères) fixés dans le carter 3.

Les coulisseaux 34, 35, 36 sont disposés parallèlement à l'arbre mené 6 de la boîte de vitesses principale 1 et l'un à côté de l'autre.

Le premier coulisseau 34 est lié à la fourchette 30 (figure 2) et est destiné à engager deux vitesses supérieures en marche avant de la boîte de vitesses principale 1. Le deuxième coulisseau 35 est lié à la fourchette 31 et est destiné à engager deux vitesses inférieures en marche avant de la boîte de vitesses principale 1. Le troisième coulisseau 36 est lié à la fourchette 32 et est destiné à engager la vitesse en marche arrière ainsi que de la vitesse la plus inférieure en marche avant de la boîte de vitesses principale 1.

La figure 2 représente les coulisseaux 34, 35, 36 au point mort quand les manchons 21, 22, 23 (figure 1) se trouvent au point mort.

Le quatrième coulisseau 37 (figure 2) est disposé parallèlement à l'arbre mené 7 (figure 1) de la boîte de vitesses auxiliaire à deux gammes 2, lié à la fourchette 33 et destiné à engager la gamme inférieure et la gamme supérieure dans la boîte de vitesses auxiliaire à deux gammes 2. Les figures 1 et 2 représentent le coulisseau 37 en position d'engagement de la gamme inférieure.

Le dispositif de commande d'une transmission composite comprend également un élément d'entraînement 38 (figures 1, 2, 3,4), lié cinématiquement au levier 39 de commande manuelle (figure 1) et destiné à assurer le déplacement séparé des coulisseaux 34, 35, 36 (figure 2) du point mort en position d'engagement des vitesses et inversement. L'élément d'entraînement 38 est réalisé sous la forme d'un arbre désigné par le même repère 38 et est monté dans la partie 3b du carter 3 de manière à pouvoir se déplacer et notamment tourner autour de son axe (non désigné par le repère) et se déplacer dans le sens axial suivant son axe dans la direction transversale par rapport aux coulisseaux 34, 35, 36. Le levier 39 de commande manuelle possède une boule 40 (figure 1) disposée dans la cabine (non représentée) du conducteur d'un moyen de transport de manière que le conducteur de ce moyen puisse déplacer la boule 40 du levier 39 d'une main suivant une trajectoire sous la forme d'un II ou "double H" (figure 5) dans la direction transversale entre quelques points morts de celle-ci N1, N2, N3, N4 et N5 et dans la direction longitudinale de chaque point mort N1, N2, N3, N4, N5 dans la position d'engagement des rapports de la transmission, c'est-à-dire, de la position N1 en position C et R, de la position N2 en position I et II, de la position N3 en position III et IV, de la position N4 en positions V et VI, de la position N5 en positions VII-VIII.

La liaison cinématique de l'élément d'entraînement 38 représentée par un train interrompu mixte sur la figure 1 et le levier 39 de commande manuelle est réalisée à l'aide de n'importe quel mécanisme connu (non représenté) convenant à cet objectif qui assure le déplacement axial de l'élément d'entraînement 38 pendant qu'on déplace la boule 40 du levier 39 dans le sens transversal et la rotation de l'élément d'entraînement 38 dans l'un ou dans l'autre sens pendant le déplacement longitudinal de la boule 40 du levier 39 des positions N1, N2, N3, N4, N5. Pour ne pas compliquer la compréhension de l'invention, on ne décrit pas ce mécanisme bien connu.

Une came 41 est rendu solidaire de l'arbre 38 et possède deux doigts 42, 43 (figure 3) faisant saillie et disposés à une distance donnée l'un par rapport à l'autre suivant l'axe géométrique de l'arbre 38. Chaque coulisseau 34, 35, 36 possède sa propre encoche désignée par 34a, 35a, 36a respectivement qui se trouvent sur une même ligne essentiellement lorsque ces coulisseaux sont au point mort. Les doigts 42, 43 sont disposés à une telle distance l'un par rapport à l'autre que quelle que soit la position que l'arbre 38 prend suivant son axe géométrique l'un des doigts 42 ou 43 se place dans l'une des encoches 34a, 35a ou 36a.

Le dispositif de commande d'une transmission composite comporte un dispositif d'exécution 44 (figure 1) pour le déplacement du quatrième coulisseau 37 en position d'engagement de la gamme inférieure et en position d'engagement de la gamme supérieure et lié cinématiquement à l'élément d'entraînement 38.

Le dispositif d'exécution 44 (figure 2) est conçu sous forme d'un vérin pneumatique à double effet fixé sur le carter 3 et désigné par le même repère 44. Un piston mobile 45 est logé dans le vérin pneumatique 44 et partage la cavité du vérin 44 en deux chambres de travail 44a et 44b. Le piston 45 est lié rigidement au quatrième coulisseau 37.

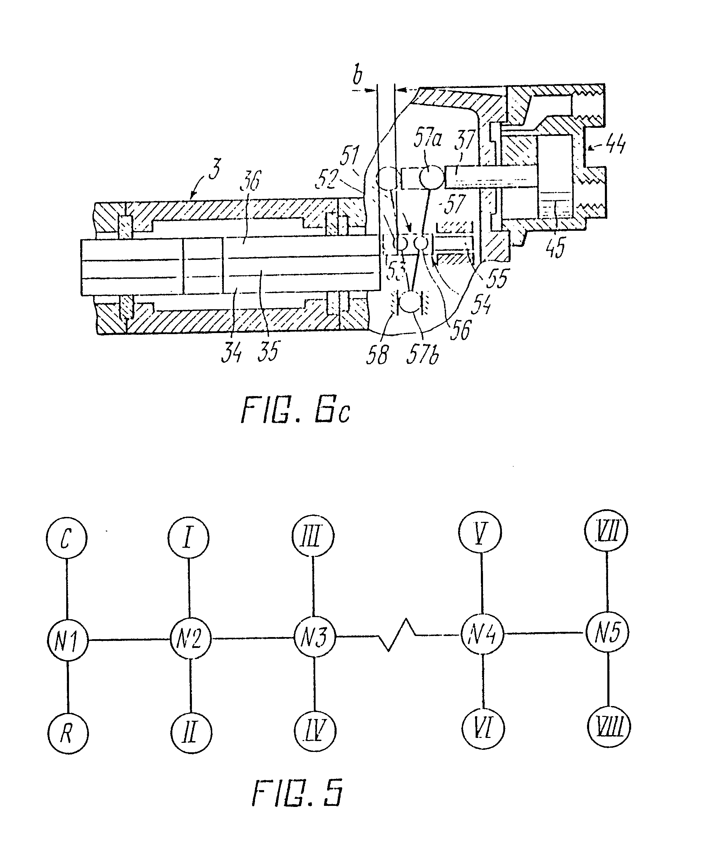

Une soupape 46 est installée sur la partie 3b (figure 1) du carter 3 sur la partie 3a (figure 1) du carter 3. Elle comprend deux poussoirs 46a, 46b (figure 4) destinés à coopérer avec la camme 41 pour assurer la commande du vérin pneumatique 44. La soupape 46 est mise en communication par une conduite 47 (figures 1, 4) avec une source 48 d'air comprimé, par une conduite 49 avec la chambre de travail 44a (figure 2) du vérin pneumatique 44 et par une conduite 50 (figure 4) avec la chambre de travail 44b (figures 1, 2) du vérin pneumatique 44.

Dans les autres cas, le dispositif d'exécution 44 peut être réalisé hydrauliquement ou électriquement et comprendre des organes de commande correspondants qui sont actionnés par l'arbre 38.

Le dispositif de commande d'une transmission composite comporte un mécanisme 51 (figure 1) destiné à déplacer le quatrième coulisseau 37 en position de la gamme inférieure pendant le déplacement du troisième coulisseau 36 du point mort en position d'engagement de la vitesse et notamment de la vitesse de marche avant comme montré sur la figure 1. Ce mécanisme 51 comporte le premier élément 52 (figures 6, 6a) lié de façon qu'il se déplace conjointement avec le quatrième coulisseau 37 et le deuxième élément 53, disposé en face du premier élément 52 et destiné à coopérer avec le premier élément et lié au troisième coulisseau 36 de façon à pouvoir se déplacer conjointement avec celui-ci.

Dans le mécanisme 51 réalisé selon cette conception dans laquelle le troisième coulisseau 36 et le quatrième coulisseau 37 sont disposés essentiellement suivant une ligne comme montré sur les figures 6, 6a, 6b, le premier élément 52 est réalisé sous la forme d'un butoir, lié rigidement au coulisseau 37 et désigné par le même repère 52 et le deuxième élément est réalisé lui aussi sous la forme d'un butoir lié rigidement au coulisseau 36 et désigné par le même repère 53.

Ce mode de réalisation du mécanisme 51 est particulièrement avantageux quand la valeur de la course du quatrième coulisseau 37, depuis la position d'engagement de la gamme supérieure en position d'engagement inférieure de la boîte de vitesses auxiliaire à deux gammes 2, est égale essentiellement à la valeur de la course du troisième coulisseau 36 du point mort en position d'engagement de la vitesse de la marche arrière dans la boîte de vitesses principale 1.

Dans le cas où la valeur de la course du quatrième coulisseau 37, depuis la position d'engagement de la gamme supérieure en position d'engagement de la gamme inférieure de la boîte de vitesses auxiliaire à deux gammes 2, diffère sensiblement de la valeur de la course du troisième coulisseau 36 se déplaçant du point mort en position d'engagement de la vitesse en marche arrière de la boîte de vitesses principale 1, le troisième coulisseau 36 et le quatrième coulisseau 37 sont disposés essentiellement parallèlement à une distance l'un par raport à l'autre comme montré sur la figure 6c, le mécanisme 51 de déplacement du quatrième coulisseau comporte dans ce cas un ensemble levier et articulation 54 monté dans le carter 3.

L'ensemble levier et articulation 54 comprend un coulisseau supplémentaire 55 disposé essentiellement suivant une même ligne avec le troisième coulisseau 36 parallèlement au quatrième coulisseau 37. Ce coulisseau 55 est monté de façon à pouvoir coulisser dans le carter 3 et est rendu solidaire du premier élément 52 réalisé sous la forme d'un butoir prévu sur le coulisseau 55. L'ensemble levier d'articulation 54 est destiné à accoupler les éléments 52, 53 aux coulisseaux 36, 37.

Un levier 57 à deux bras, lié au coulisseau supplémentaire 55 à l'aide d'une articulation 56 réalisée selon une conception connue, possède des extrémités sphériques 57a, 57b et s'appuie par une extrémité 57a contre le coulisseau 37 et par l'autre extrémité 57b contre l'appui 58, fixé dans le carter 3. Le rapport entre les longueurs des bras du levier 57 est choisi de façon que, pendant le déplacement du quatrième coulisseau 37 de la position d'engagement de la gamme supérieure en position d'engagement de la gamme inférieure de la boîte de vitesses auxiliaire à deux gammes 2, la valeur de la course du coulisseau supplémentaire 55 soit égale essentiellement à la valeur de la course du troisième coulisseau 36 se déplaçant depuis le point mort en position d'engagement de la vitesse en marche arrière de la boîte de vitesses principale 1.

Le dispositif de commande de la transmission composite d'un moyen de transport réalisé selon la présente invention fonctionne de la manière suivante.

Dans la position de départ, les coulisseaux 34, 35, 36 et les manchons 21, 22, 23 à denture de changement de vitesses accouplés auxdits coulisseaux à l'aide des fourchettes 30, 31, 32 se trouvent au point mort quand l'arbre mené 6 de la boîte de vitesses principale 1 n'est pas relié à l'arbre menant 4, tandis que le coulisseau 37 et le manchon à denture 29 de changement de vitesse qui est lié audit coulisseau par la fourchette 33 se trouvent en position d'engagement de la gamme inférieure dans laquelle la couronne dentée 27 de la boîte de vitesses auxiliaire à deux gammes 2 est liée à la pièce intercalaire 28 et est immobilisée et ne peut pas tourner.

La boule 40 du levier 39 de commande manuelle peut se trouver dans n'importe quelle position N1, N2 ou N3. La chambre de travail 44b du vérin pneumatique 44 est mise en comumnication à travers la conduite 50, la soupape 46 et la conduite 47 avec la source 48 d'air comprimé tandis que la chambre de travail 44a du vérin pneumatique 44 est liée à travers la conduite 49 et la soupape 46 à l'atmosphère.

Dans la position de départ, le couple moteur n'est pas transmis du moteur par la transmission.

En mettant le moyen de transport en route, son moteur étant en marche, le conducteur débraye (l'embrayage n'est pas montré), met la boule 40 du levier 39 de commande manuelle en position N2 puis la déplace en position I et embraye.

Lorsqu'on met la boule 40 du levier 39 de commande manuelle en position N2 le doigt 42 s'engage dans l'encoche 35a du coulisseau 35 et lorsqu'on déplace la boule 40 du levier 39 de commande manuelle en position I l'arbre 38 tourne et le coulisseau 38 se déplace à gauche d'après la figure 2.

Le coulisseau 35 en agissant par l'intermédiaire de la fourchette 31 déplace le manchon 22 à denture à droite d'après la figure 1 donc en position dans laquelle il accouple le pignon 17 et l'arbre mené 6 de la boîte de vitesses principale 1. A cette position, la première vitesse en marche avant, c'est-à-dire la vitesse inférieure, de la marche avant dans la boîte de vitesses principale 1 se met en prise ce qui assure, en combinaison avec la gamme inférieure dans la boîte de vitesses auxiliaire à deux gammes 2, l'obtention du premier rapport de la marche avant de la transmission composite.

Après embrayage, le couple moteur est transmis du moteur par l'intermédiaire de l'embrayage à l'arbre menant 4, puis il est transmis à travers une paire de pignons 8, 9 à l'arbre intermédiaire 5 de la boîte de vitesses principale 1, ensuite par l'intermédiaire des pignons 12, 17 et le manchon 22 à denture il est transmis à l'arbre mené 6 de la boîte de vitesses principale 1. Ensuite, le couple moteur est transmis par l'intermédiaire du pignon solaire 24 et des satellites 25, qui roulent sur la couronne dentée 27 immobilisée, au porte-satellites 26 lié à l'arbre mené 7 et ensuite est transmis de l'arbre mené 7 aux roues (non montrées) d'un moyen de transport.

Pour passer du premier au deuxième rapport en marche avant de la transmission, le conducteur d'un moyen de transport doit, après avoir débrayé, déplacer la boule 40 du levier 39 de commande manuelle de la position I à travers la position N2 en position II et embrayer de nouveau. Pendant ce changement de rapports l'arbre 38 tourne et le coulisseau 35 se déplace vers la droite d'après la figure 2. En même temps, le coulisseau 35 pousse, par l'intermédiaire de la fourchette 31, le manchon 22 à denture vers la gauche d'après la figure 1 en position dans laquelle il accouple le pignon 16 et l'arbre mené 6 de la boîte de vitesses principale 1 entre eux. Dans cette position, la deuxième vitesse en marche avant dans la boîte de vitesses principale 1 s'engage ce qui assure, en combinaison avec la gamme inférieure dans la boîte de vitesses auxiliaire à deux gammes 2, l'obtention du deuxième rapport de la marche avant dans la transmission.

Après l'embrayage, le couple moteur est transmis du moteur par l'embrayage mis en jeu à l'arbre menant 4, puis par l'intermédiaire d'une paire de pignons 8, 9 à l'arbre intermédiaire 5 de la boîte de vitesses principale 1, ensuite il est transmis par les pignons 11, 16 et le manchon 22 à denture à l'arbre mené 6 de la boîte de vitesses principale 1 et, après cela, suivant la succession analogue au premier rapport.

Lors du passage du deuxième rapport au troisième en marche avant de la transmission, le conducteur du moyen de transport doit, après avoir débrayé, déplacer la boule 40 du levier 39 de commande manuelle depuis la position II à travers les positions N2 et N3 en position III et embrayer de nouveau. Pendant cette manoeuvre, l'arbre 38 tourne et le coulisseau 35 et le manchon 22 à denture se déplacent au point mort, ensuite l'arbre 38 se déplace dans le sens axial et le doigt 42 se dégage de l'encoche 35a du coulisseau 35 et entre dans l'encoche 34a du coulisseau 34 et l'arbre 38 tourne alors que le coulisseau 34 se déplace à gauche d'après la figure 2. Par l'intermédiaire de la fourchette 30, le coulisseau 34 déplace le manchon 21 à denture vers la droite d'après la figure 1 en position dans laquelle il accouple le pignon 15 et l'arbre mené 6 de la boîte de vitesses principale 1 entre eux.

A ce moment, la troisième vitesse en marche avant dans la boîte de vitesses principale 1 entre en prise ce qui assure, en combinaison avec la gamme inférieure dans la boîte de vitesses auxiliaire à deux gammes 2, l'obtention du troisième rapport en marche avant dans la transmission composite.

Après l'embrayage, le couple moteur est transmis du moteur par l'intermédiaire de l'embrayage mis en jeu à l'arbre menant 4, puis il est transmis par un couple de pignons 8, 9 à l'arbre intermédiaire 5 de la boîte de vitesses principale 1, par les pignons 10, 15 et le manchon 21 à l'arbre mené 6 de la boîte de vitesses principale 1 de manière analogue aux cas du premier et du deuxième rapports.

Pour passer du troisième au quatrième rapport de la transmission, le conducteur du moyen de transport doit, après avoir débrayé déplacer la boule 40 du levier 39 de commande manuelle de la position III à travers la position N3 en position IV et embrayer de nouveau. Pendant ce changement, l'arbre 38 tourne et le coulisseau 34 se déplace à droite d'après la figure 2.

Par l'intermédiaire de la fourchette 30, le coulisseau 34 déplace le manchon 21 à denture à gauche d'après la figure 1 en position dans laquelle il relie directement l'arbre menant 4 et l'arbre intermédiaire 6 de la boîte de vitesses principale 1 entre eux. A ce moment, il se produit l'engagement de la quatrième vitesse, (vitesse en prise directe de la marche avant dans la boîte de vitesses principale 1 ce qui assure, en combinaison avec la gamme inférieure dans la boîte de vitesses auxiliaire à deux gammes 2, l'obtention du quatrième rapport en marche avant dans la transmission. Après l'embrayage, le couple moteur est transmis du moteur par l'intermédiaire de l'embrayage mis en jeu à l'arbre menant 4, puis il est transmis par l'intermédiaire du manchon 21 à l'arbre mené 6 de la boîte de vitesses principale 1, et, ensuite, de manière analogue aux cas du premier, du deuxième et du troisième rapports.

En passant du quatrième au cinquième rapport en marche avant de la transmission le conducteur du moyen de transport débraye et déplace la boule 40 du levier 39 de commande manuelle de la position IV à travers la position N3, N4 en position V et embraye de nouveau. Pendant le déplacement de la boule 40 du levier 39 de commande manuelle de la position VI en position N3 l'arbre 38 tourne et le coulisseau 35 et le manchon 21 à denture se déplacent au point mort. Pendant qu'on déplace la boule 40 du levier de commande de la position N3 en position N4 l'arbre 38 se déplace dans le sens axial.

A ce moment, le doigt 42 se dégage de l'encoche 34a du coulisseau 34 et le doigt 43 entre dans l'encoche 35a du coulisseau 35. En même temps, la came 41 déplace les poussoirs 46a, 46b de la soupape 46 qui relie la conduite 50 à l'atmosphère et la conduite 49 à travers la conduite 47 à la source 48 d'air comprimé.

Sous l'action de la pression de l'air arrivant dans la chambre de travail 44a du vérin pneumatique 44, le piston 45 déplace le couliseau 37 à gauche d'après la figure 1. Par l'intermédiaire de la fourchette 33, le coulisseau 37 déplace le manchon 29 à denture vers la droite d'après la figure 1. Il en résulte que, la couronne dentée 27 se solidarise avec l'arbre mené 7 et la gamme supérieure dans la boîte de vitesses auxiliaire à deux gammes 2 se trouve engagée.

Dans cette gamme, l'arbre mené 6 de la boîte de vitesses principale 1 tourne en une seule pièce avec l'arbre mené 7 de la boîte de vitesses auxiliaire à deux gammes 2. Pendant qu'on déplace la boule 40 du levier 39 de commande manuelle N4 en position V, le doigt 43 déplace le coulisseau 35 en position d'engagement de la première vitesse en marche avant de la boîte de vitesses principale 1, ce qui assure, en combinaison avec la gamme supérieure de la boîte de vitesses auxiliaire à deux gammes 2, l'obtention du cinquième rapport de la marche avant de la transmission.

Après embrayage, le couple moteur est transmis du moteur à l'arbre menant 4, puis il est transmis de celui-ci à l'arbre mené 6 de la façon analogue au cas du premier rapport de la transmission tel qu'on vient de le décrire ci-dessus et ensuite, depuis l'arbre mené 6 directement à l'arbre mené 7.

Pour passer du cinquième au sixième rapport de la marche avant de la transmission, du sixième rapport au septième rapport et du septième rapport au huitième rapport, le conducteur du moyen de transport embraye et puis déplace la boule 40 du levier 39 de commande de la position V à travers les positions N4 en position VI, de la position VI à travers la position N4 et N5 en position VII, de la position VII à travers la position N5 en position VIII.

A ce moment, dans la boîte de vitesses principale 1, il se produit le passage de la première vitesse en marche avant en deuxième, de la deuxième en troisième et de la troisième en quatrième de la façon analogue au cas décrit ci-dessus. En combinant, la première, la troisième et la quatrième vitesses en marche avant de la boîte de vitesses principale 1 avec la gamme supérieure de la boîte de vitesses auxiliaire à deux gammes 2, on obtient le sixième, le septième et le huitième rapports en marche avant de la transmission respectivement.

Le changement inverse des rapports dans la transmission du huitième rapport jusqu'au premier se fait en réalisant les déplacements correspondants de la boule 40 du levier 39 de commande manuelle en débrayant et en embrayant.

Pour le déplacement en marche arrière, le conducteur dans le moyen de transport immobile, dont le moteur fonctionne, débraye, met la boule 40 du levier 39 de commande manuelle en position N1, puis la déplace en position R et embraye.

Lorsque la boule 40 du levier 39 de commande manuelle est mise en position N1, le doigt 43 s'engage dans l'encoche 36a du coulisseau 36 et lorsqu'on déplace la boule 40 du levier de commande manuelle en position R on provoque la rotation de l'arbre 38 et le déplacement du coulisseau 36 à droite d'après les figures 1 et 2.

Par l'intermédiaire de la fourchette 32, le coulisseau 36 déplace le manchon 23 à denture à gauche d'après la figure 1 en position dans laquelle il réunit le pignon 19 et l'arbre mené 6 de la boîte de vitesses principale 1. A ce moment, la vitesse de marche arrière de la boîte de vitesses principale entre en prise ce qui assure, en combinaison avec la gamme inférieure de la boîte de vitesses auxiliaire à deux gammes 2, l'obtention du rapport de la marche arrière dans la transmission.

Du fait de l'engagement de la gamme inférieure de la boîte de vitesses auxiliaire, le coulisseau 37 se trouve en position extrême droite d'après la figure 1 et un espacement "a" (figure 6) sépare le butoir 53 et le butoir 52 du coulisseau 37 ou l'espacement "b" (figure 6c) sépare le butoir 53 et le butoir 52 du coulisseau supplémentaire 55, le déplacement du coulisseau 36 vers la droite d'après les figures 6 et 6c en position d'engagement de la vitesse de marche arrière de la boîte de vitesses principale 1 n'influe aucunement sur la position du coulisseau 37.

Après embrayage, le couple moteur est transmis du moteur, par l'intermédiaire de l'embrayage mis en jeu, a l'arbre menant 4, puis par un couple de pignons 8, 9 il est transmis à l'arbre intermédiaire 5 de la boîte de vitesses principale 1 et, ensuite, il est transmis par l'intermédiaire des pignons 14, 20, 19 et du manchon 29 à denture à l'arbre mené 6 de la boîte de vitesses principale 1 et l'entraîne en rotation dans la direction inverse à la rotation de l'arbre menant 4.

Ensuite, le couple moteur est transmis par l'intermédiaire du pignon solaire 24 et des satellites 25, qui roulent sur la couronne dentée 27 bloquée fixe au porte-satellites 26, lié à l'arbre mené et, puis de l'arbre mené 7, il est transmis aux roues (non représentées) du moyen de transport en les entraînant en rotation dans la direction inverse à la direction de la rotation pendant la marche du moyen de transport en avant.

Pour mettre le moyen de transport en déplacement à une très petite vitesse dite "vitesse rampante" en marche avant, le conducteur du moyen de transport, dont le moteur est en fonctionnement, débraye, met la boule 40 du levier 39 de commande manuelle en position N1, puis la déplace en position "C" et embraye.

En déplaçant la boule 40 du levier 39 de commande manuelle en position N1, le doigt 43 s'engage dans l'encoche 36a du coulisseau 36 et, en déplaçant la boule 40 du levier 39 de commande manuelle en position C, on provoque la rotation de l'arbre 38 et le déplacement du coulisseau 36 à gauche d'après les figures 1 et 2.

Par l'intermédiaire de la fourchette 32, le coulisseau 36 déplace le manchon 23 à droite d'après la figure 1 dans une position dans laquelle il accouple le pignon 18 et l'arbre mené 6 de la boîte de vitesses principale 1 entre eux. A cette position, la vitesse la plus inférieure en marche avant de la boîte de vitesses principale 1 est en prise ce qui assure, en combinaison avec la gamme inférieure de la boîte de vitesses auxiliaire à deux gammes 2, l'obtention du plus bas rapport dit "rapport rampant" en marche avant de la transmission correspondant à la vitesse "rampante" du déplacement.

Après embrayage, le couple moteur est transmis par l'embrayage mis en jeu à l'arbre menant 4, puis par l'intermédiaire d'un couple de pignons 8, 9 il est transmis à l'arbre intermédiaire 5 de la boîte de vitesses principale 1, ensuite il est transmis par les pignons 13, 18 et le manchon 23 à denture à l'arbre mené 6 de la boîte de vitesses principale 1. Ensuite, le couple moteur est transmis par l'intermédiaire du pignon solaire 24 et des satellites 25, qui roulent sur la couronne dentée bloquée fixe, au porte-satellites 26 lié à l'arbre mené 7 et puis de l'arbre mené 7 aux roues d'un moyen de transport.

Le processus de changement de rapports est décrit pour le cas d'un fonctionnement normal du dispositif d'exécution 44.

Dans le cas d'une panne du dispositif d'exécution 44 par suite du fonctionnement anormal de la source 48 d'air comprimé ou de la soupape 48, la gamme supérieure de la boîte de vitesses auxiliaire à deux gammes 2 étant en prise, le manchon 29 à denture reste en position droite d'après la figure 1 malgré le déplacement de la boule 40 du levier 39 de commande manuelle de la position N4 en position N3 du fait qu'à ce moment le dispositif d'exécution 44 ne fonctionne pas. Dans cette position du manchon 29 à denture il est impossible de lancer le moyen de transport en route.

Dans ce cas, après l'arrêt du moyen de transport le conducteur débraye, met la boule 40 du levier 39 de commande manuelle en position N1, puis la déplace en position R et la ramène en position N1.

Dans le dispositif de commande d'une transmission composite dans lequel les coulisseaux 36 et 37 sont disposes essentiellement sur une même ligne, quand le dispositif d'exécution 44 ne fonctionne pas, quand la gamme supérieure de la boîte de vitesses auxiliaire à deux gammes est en prise et la boule 40 du levier 39 de commande manuelle est mise en position N1, les coulisseaux 36 et 37 se trouvent en position représentée sur la figure 6a. Le butoir 53 du coulisseau 36 est alors disposé au voisinage immédiat du butoir 52 du coulisseau 37.

Pendant le déplacement de la boule 40 du levier 39 de commande manuelle de la position N1 en position R le butoir 53 du coulisseau 36 se déplace conjointement avec ledit coulisseau en position représentée sur la figure 6b et, en agissant sur le butoir 52 du coulisseau 37, fait se déplacer le coulisseau 37 en position représentée sur la figure 6a, position d'engagement de la gamme inférieure de la boîte de vitesses auxiliaire à deux gammes 2. Le coulisseau 37 en agissant par l'intermédiaire de la fourchette 33 déplace le manchon 29 à denture à gauche d'après la figure 1 en position dans laquelle il relie la couronne dentée 27 avec la pièce intercalaire 28. En conséquence, la gamme inférieure de la boîte de vitesses auxiliaire à deux gammes 2 se trouve mise en prise.

Lorsqu'on ramène la boule 40 du levier 39 de commande manuelle en position N1, le coulisseau 37 reste en position d'engagement de la gamme inférieure de la boîte de vitesses auxiliaire. Ensuite, le conducteur peut engager, dans la boîte de vitesses principale 1, les vitesses en marche avant en se servant du levier 39 de commande manuelle.

A ce moment, il se produit l'engagement de quatre premiers rapports en marche avant dans la transmission ce qui donne la possibilité au moyen de transport de se déplacer avec le dispositif d'exécution 44 en panne destiné à changer les gammes de la boîte de vitesses auxiliaire à deux gammes.

Dans le dispositif de commande d'une transmission composite dans lequel les coulisseaux 36 et 37 sont disposés essentiellement parallèlement et à une distance donnée l'un de l'autre, dans le cas où le dispositif d'exécution 44 ne fonctionne pas, la gamme supérieure de la boîte de vitesses auxiliaire à deux gammes 2 est engagée et la boule 40 du levier de commande manuelle est en position N1, le coulisseau 36 est en position représentée sur la figure 6c et les coulisseaux 55 et 37 et le levier 57 se trouvent en position représentée par un trait interrompu mixte sur la figure 6c. Dans ce cas, le butoir 53 du coulisseau 36 est disposé au voisinage immédiat du butoir 52 du coulisseau 55.

Lors du déplacement de la boule 40 du levier 39 de commande manuelle de la position N1 en position R le butoir 53 du coulisseau 36 se déplace conjointement avec ce coulisseau 36 en agissant sur le butoir 52 du coulisseau 55 et fait se déplacer le coulisseau 55 en position, représentée sur la figure 6c par les traits pleins. Par l'intermédiaire du levier 57, le coulisseau 55 déplace le coulisseau 37 en position représentée sur la figure 6c par les traits pleins, dans laquelle la gamme inférieure de la boîte de vitesses auxiliaire à deux gammes 2 entre en prise.

En agissant par l'intermédiaire de la fourchette 33, le coulisseau 37 déplace le manchon 29 à denture à gauche d'après la figure 1 en position dans laquelle il accouple la couronne dentée 27 avec la pièce intercalaire 28. En conséquence, la gamme inférieure de la boîte de vitesses auxiliaire à deux vitesses 2 se trouve engagée.

Après cela, on peut engager quatre premiers rapports de la marche avant de la transmission en opérant de la manière décrite ci-dessus et on peut lancer le moyen de transport en marche avec le dispositif d'exécution 44, destiné à changer les gammes dans la boîte de vitesses auxiliaire à deux gammes 2, en panne.

Quoi qu'on ait décrit ci-dessus le dispositif de commande d'une transmission composite d'un moyen de transport dans lequel la direction du déplacement du coulisseau 37 depuis la position d'engagement de la gamme supérieure en position d'engagement de la gamme inférieure de la boîte de vitesses auxiliaire à deux gammes 2 coïncide avec la direction du déplacement du coulisseau 36 depuis la point mort en position d'engagement de la vitesse en marche arrière de la boîte de vitesses principale 1, il est bien évident qu'il est possible de créer le dispositif de commande entièrement analogue dans lequel la direction du déplacement du coulisseau 37 depuis la position d'engagement de la gamme supérieure en position d'engagement de la gamme inférieure de la boîte de vitesses auxiliaire à deux gammes 2 sera inverse à la direction du déplacement du coulisseau 36 depuis le point mort en position d'engagement de la vitesse la plus inférieure en marche avant de la boîte de vitesses principale 1.

Dans ce dernier cas, lorsque le dispositif d'exécution 44 est en panne, pour mettre de force la gamme inférieure dans la boîte de vitesses auxiliaire, il est indispensable de déplacer la boule 40 du levier 39 de commande manuelle depuis le point mort N1 en position C.

Le dispositif de commande, décrit ci-dessus augmente la fiabilité de la transmission d'un moyen de transport, transmission qui possède une boîte de vitesses principale avec une commande manuelle et une boîte de vitesses auxiliaire à deux gammes liée en série à la boîte de vitesses principale ayant un dispositif d'exécution pourvu d'une commande de puissance.

Applicabilité industrielle.

Il est plus efficace d'utiliser la présente invention pour une transmission composite d'un moyen de transport, transmission qui possède une boîte de vitesses principale et une boîte de vitesses auxiliaire à deux gammes l'une supérieure et l'autre inférieure.

Le dispositif de commande d'une transmission composite d'un moyen de transport réalisé selon la présente invention peut être utilisé dans d'autres moyens de transport tels que des tracteurs, des machines routières et de bâtiment etc.

**Revendications**

1. Dispositif de commande d'une transmission composite d'un moyen de transport ayant une boîte de vitesses principale (1) et une boîte de vitesses auxiliaire (2) à deux gammes, une gamme supérieure et une gamme inférieure, liée en série à la boîte de vitesses principale, dispositif comportant un carter (3), où sont montés de manière à pouvoir coulisser dans le carter (3), le premier et le deuxième coulisseaux (34, 35), destinés à engager les vitesses en marche avant de la boîte de vitesses principale (1), le troisième coulisseau (36) pour l'engagement de la vitesse en marche arrière de la boîte de vitesses principale (1) et le quatrième coulisseau (37) destiné à engager la gamme inférieure et la gamme supérieure de la boîte de vitesses auxiliaire à deux gammes (2) ainsi qu'un élément d'entraînement (38) monté mobile dans le carter (3), lié cinématiquement à un levier (39) de commande manuelle et destiné à déplacer séparément le premier, le deuxième et le troisième coulisseaux (34, 35, 36) du point mort en position d'engagement des vitesses et inversement, un dispositif d'exécution (43) destiné à déplacer le quatrième coulisseau (37) en position d'engagement de la gamme inférieure et en position d'engagement de la gamme supérieure et lié cinématiquement audit élément d'entraînement (38) caractérisé en ce qu'on a prévu un mécanisme (51) pour le déplacement du quatrième coulisseau (37) en position d'engagement de la gamme inférieure lors du déplacement du troisième coulisseau (36) du point mort en position d'engagement de la vitesse sous l'action dudit élément d'entraînement (38), mécanisme qui comporte un premier élément (52) lié de façon à pouvoir se déplacer conjointement avec le quatrième coulisseau (37) et un deuxième élément (53) monté en face du premier élément (52) et pour coopérer avec ledit premier élément et lié de façon à pouvoir se déplacer conjointement avec le troisième coulisseau (36).

2. Dispositif de commande selon la revendication 1, caractérisé en ce que le troisième coulisseau (36) et le quatrième coulisseau (37) sont disposés essentiellement suivant une ligne, en ce que le premier élément (52) et le deuxième élément (53) du mécanisme (51) de déplacement du quatrième coulisseau (37) sont réalisés sous la forme des butoirs liés rigidement aux coulisseaux correspondants (37, 36).

3. Dispositif de commande selon la revendication 1, caractérisé en ce que le troisième coulisseau (36) et le quatrième coulisseau (37) sont disposés essentiellement parallèlement et espacés l'un de l'autre à une distance donnée, en ce que ledit mécanisme (51) de déplacement du quatrième coulisseau (37) comporte un ensemble levier et articulation (54) comprenant un coulisseau supplémentaire (55) monté d'une manière mobile dans le carter (3) et disposé essentiellement suivant une même ligne avec le troisième coulisseau (36) et un levier (57) d'articulation avec le coulisseau (55) et s'appuyant par ses extrémités (57a, 57b) sur le quatrième coulisseau (37) et l'appui (58) respectivement, appui fixé dans le carter (3), le premier élément (52) et le deuxième élément (53) du mécanisme (51) de déplacement du quatrième coulisseau (37) étant réalisés sous la forme des butoirs liés rigidement aux coulisseaux correspondants (55, 36).

FIG.1

FIG.2

FIG.3

FIG.4

EP 0 433 448 A1

FIG. 6c

FIG. 5

EP 0 433 448 A1

FIG. 6

FIG. 6a

FIG. 6b

# INTERNATIONAL SEARCH REPORT

International Application No PCT/SU 88/00008

| I. CLASSIFICATION OF SUBJECT MATTER (if several classification symbols apply, indicate all) * |
|---|
| According to International Patent Classification (IPC) or to both National Classification and IPC |
| IPC⁴: B 60 K 20/10 |

## II. FIELDS SEARCHED

| Minimum Documentation Searched ⁷ | |
|---|---|
| Classification System | Classification Symbols |
| IPC⁴ | B 60 K 20/02, 20/10 + 20/16, F 16 H 5/08 |

| Documentation Searched other than Minimum Documentation<br>to the Extent that such Documents are Included in the Fields Searched ⁸ |
|---|
| |

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| A | SU, AI, 727485 (Tsentralny ordena Trudovogo Krasnogo Znameni nauchno-issledovatelsky automobilny i automotorny institut) 20 April 1980 (20.04.80), see column 3, fig. 1-4 | I |
| | -- | |
| A | DE, AI, 3000577 (ZAHNRADFABRIK FRIEDRICHS-HAFEN AG), 16 July 1981 (16.07.81), see figures 1-5 (cited in the description)<br>& US, A, 4377951, 29.03.83<br>FR, BI, 2473665, 05.06.87<br>GB, A, 2066909, 15.07.81<br>BR, A, 8100112, 21.07.81 | |
| | -- | |
| A | DE, C2, 3333423, (ZAHNRADFABRIK FRIEDRICH-SHAFEN AG), 13 February 1986 (13.02.86) see figures 1-8, (cited in the description)<br>.../.. | I |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 20 December 1988 (20.12.88) | 6 January 1989 (06.01.89) |
| International Searching Authority<br><br>ISA/SU | Signature of Authorized Officer |

Form PCT/ISA/210 (second sheet) (January 1985)

| III. DOCUMENTS CONSIDERED TO BE RELEVANT (CONTINUED FROM THE SECOND SHEET) | | |
|---|---|---|
| Category* | Citation of Document, with indication, where appropriate, of the relevant passages | Relevant to Claim No |
| | & GB, A, 2130664, 06.06.84 <br> FR, BI, 2536706, 09.01.87 <br> BR, A, 8306457, 26.06.84 <br><br> ----------- | |

Form PCT/ISA/210 (extra sheet) (January 1985)